# EUROPÄISCHE PATENTSCHRIFT

(11) **EP 1 172 569 B1**
(45) Veröffentlichungstag und Bekanntmachung des Hinweises auf die Patenterteilung: **04.02.2004**
(21) Anmeldenummer: 01115792.2
(22) Anmeldetag: 11.07.2001
(51) Int. Cl.: F16B 12/38, B42F 15/00

(54) **Hängerahmen zum Einhängen verschiedener Objekte**
Suspension frame for suspending various objects
Cadre de suspension pour suspendre des objets divers

(30) Priorität: 15.07.2000 DE 20012263 U
(43) Veröffentlichungstag der Anmeldung: 16.01.2002
(73) Patentinhaber: ANTON SCHNEIDER GMBH, 79341 Kenzingen (DE)
(72) Erfinder: Fahrner, Walter, 79336 Herbolzheim (DE)
(74) Vertreter: KOHLER SCHMID + PARTNER

(56) Entgegenhaltungen:
- WO-A-93/05687
- CA-A- 1 269 904
- DE-A- 2 916 017
- GB-A- 696 818

## Beschreibung

Die vorliegende Erfindung betrifft einen Hängerahmen zum Einhängen verschiedener Objekte, welcher aus einzelnen Teilen zusammenbaubar ist. Ein aus DE-A-2916017 bekannter Rahmen besteht dabei aus Fußelementen und U-förmigen Auflageprofilen zum Verbinden dieser Fußelemente, wobei die Fußelemente mindestens je ein Verankerungselement in Form eines Einrastvorsprungs aufweisen, der beim Zusammenbau des Hängerahmens in eine im jeweiligen Auflageprofil angeordnete korrespondierende Einrastöffnung einrastbar ist.

Die Probleme im Zusammenhang mit der Herstellung und Konstruktion von zusammenbaubaren Rahmen richten sich vor allem auf die Stabilität der gesamten Struktur und die Einfachheit des Zusammenbaus. Im Stand der Technik finden sich verschiedene Wege zum Zusammenbau der einzelnen Teile, welche in demontiertem Zustand an den Verbraucher geliefert werden. Viele dieser Lösungen benötigen die Hilfe verschiedener Werkzeuge wie bspw. Schraubenzieher oder Schraubenschlüssel zum Zusammenbau. Desweiteren erfordern die vorgeschlagenen Lösungen meist Verriegelungsmechanismen, die einen recht hohen Grad an technischem Geschick erfordern, um den gesamten Rahmen aufbauen zu können.

Die Aufgabe der vorliegenden Erfindung ist es, Hängerahmen der genannten Art zu verbessern, um eine formschlüssige Montage ohne die Benutzung von zusätzlichen Werkzeugen unter Berücksichtigung von geringstem Kraftaufwand zu erlauben. Ein Lösen der zusammengebauten Rahmen soll dabei nur mit Hilfe von Werkzeugen möglich sein, um eine versehentliches Auseinanderbrechen der Konstruktion zu vermeiden.

Diese Aufgabe wird erfindungsgemäß auf ebenso überraschend einfache wie wirkungsvolle Weise durch einen Hängerahmen der gattungsgemäßen Art gelöst, bei dem die Fußelemente jeweils ein weiteres Verankerungselement aufweisen, unter welches das jeweilige Auflageprofil einsetzbar ist.

Der erfindungsgemäße Hängerahmen erlaubt eine einfache Montage ohne zusätzliches Werkzeug. Für die Montage ist nur ein äußerst geringer Kraftaufwand notwendig, um die Einzelteile des Rahmens formschlüssig zusammenzubauen. Gleichzeitig entsteht eine sehr stabile Konstruktion, welche ein zufälliges Auseinanderbrechen zuverlässig verhindert. Ein Lösen der Verbindung ist nur mit Hilfe von entsprechendem Werkzeug möglich.

In einer besonderen Ausgestaltung der Erfindung bestehen die Fußelemente aus zueinander rechtwinklig angeordneten Seitenteilen und ist das weitere Verankerungselement in einem Bereich des Fußelements angeordnet ist, in welchem die Seitenteile rechtwinklig aufeinandertreffen. Dies ermöglicht ein besonders leichtes Einpassen der Auflageprofile.

Die Oberkante des weiteren Verankerungselements ist bei einer besonders bevorzugten Ausführungsform der Erfindung dabei über der Oberkante der Seitenteile angeordnet, was das Einpassen der Auflageprofile nochmals vereinfacht.

Bei vorteilhaften Weiterbildungen dieser Ausführungsformen weisen die Oberkanten der Seitenteile im Bereich des weiteren Verankerungselements eine nach unten abgeschrägte Oberfläche auf. Der Winkel der Abschrägung beträgt dabei bevorzugt 45°, was eine einfache Führung des jeweiligen Auflageprofils ermöglicht.

Die Erfindung wird im folgenden anhand der Zeichnungen näher erläutert. Dabei zeigt
- Fig. 1: einen erfindungsgemäßen Hängerahmen nach dem Zusammenbau.
- Fig. 2: ein Fußelement mit einem erfindungsgemäß eingesetzten Auflageprofil vor dem formschlüssigen Einrasten.

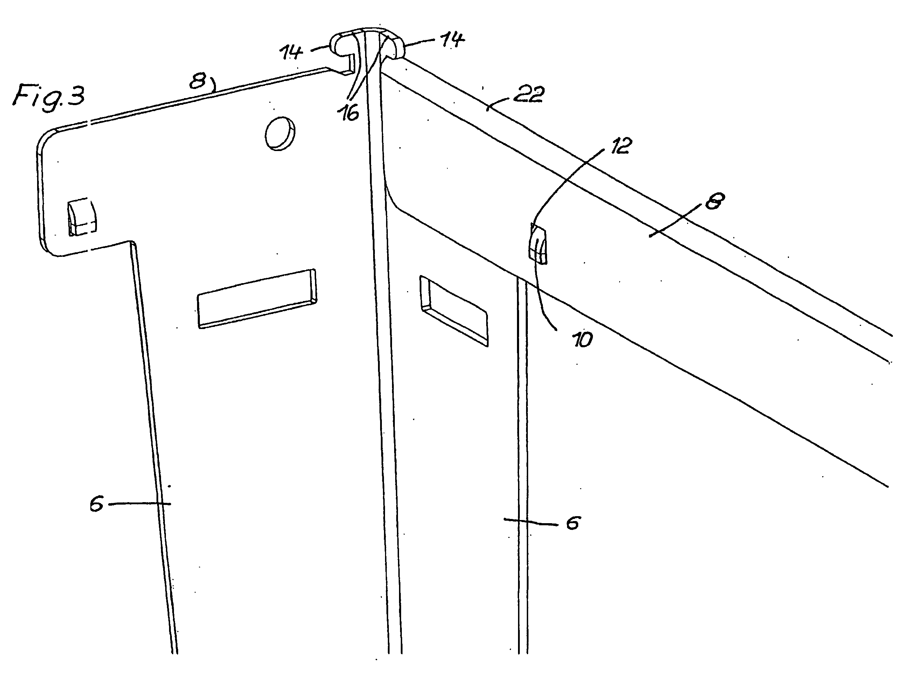

- Fig. 3: ein Fußelement mit einem erfindungsgemäß eingesetzten Auflageprofil nach dem formschlüssigen Einrasten.

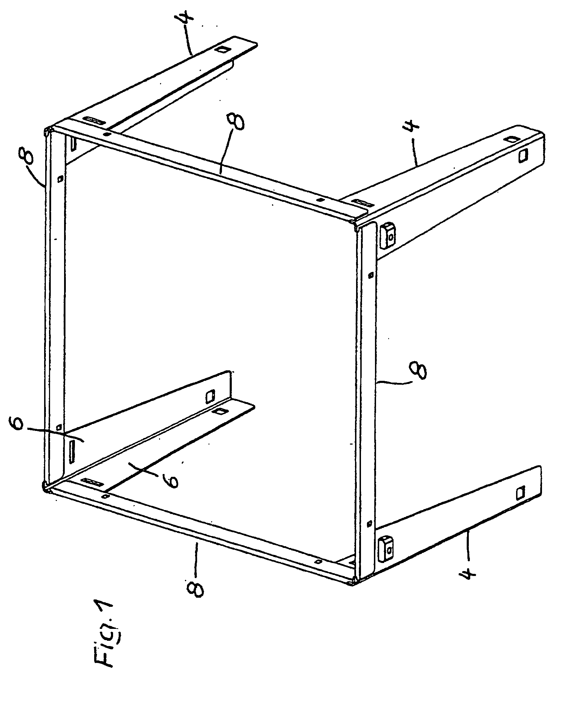

Der in Fig. 1 dargestellte Hängerahmen besteht aus vier Fußelementen 4, welche aus zueinander rechtwinklig angeordneten Seitenteilen 6 gebildet sind, und U-förmigen Auflageprofilen 8 zum Verbinden der Fußelemente 4.

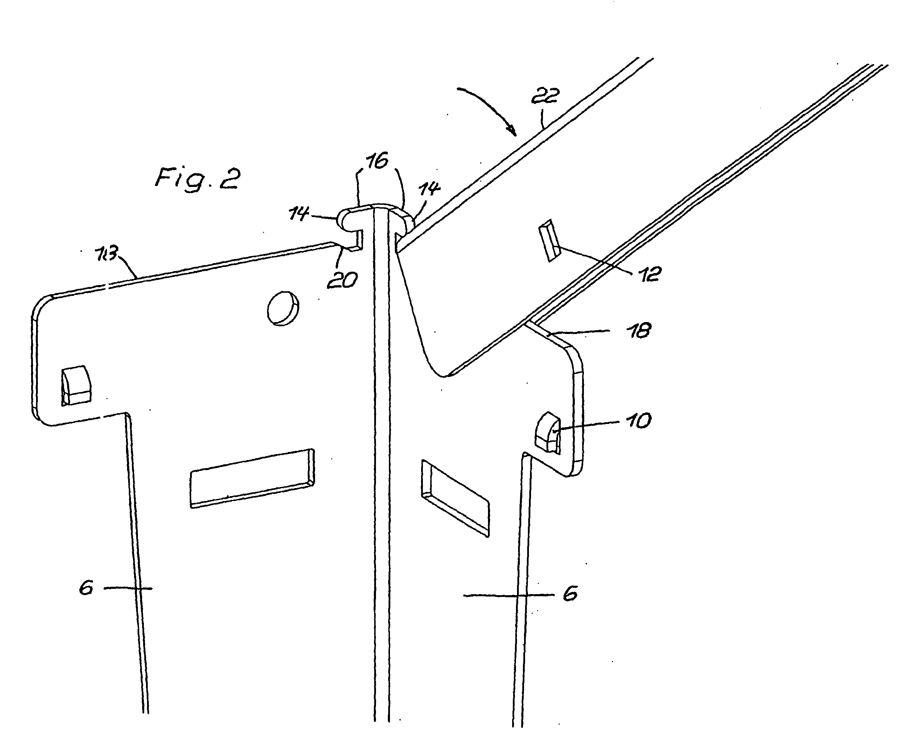

Die Seitenteile 6 der Fußelemente (Fig. 2) weisen mindestens je ein Verankerungselement 10 in Form eines Einrastvorsprungs auf, der beim Zusammenbau des Hängerahmens 2 in eine im jeweiligen Auflageprofil 8 angeordnete korrespondierende Einrastöffnung 12 einrastbar ist. Zusätzlich zu diesem Verankerungselement 10 weist jedes Seitenteil 6 ein weiteres Verankerungselement 14 auf. Dieses Verankerungselement ist so ausgebildet, dass das jeweilige Auflageprofil 8 (vgl. den Pfeil in Fig. 2) unter dieses Element einsetzbar ist. In einer bevorzugten Ausführungsform ist, wie in Fig. 2 gezeigt, das weitere Verankerungselement 14 in einem Bereich des Fußelements 4 angeordnet, in dem die Seitenteile 6 rechtwinklig aufeinandertreffen. Dabei liegt die Oberkante 16 des weiteren Verankerungselements 14 in der gezeigten bevorzugten Ausführungsform über der Oberkante 18 der Seitenteile. Die Oberkante der Seitenteile weist im Bereich des weiteren Verankerungselements 14 eine nach unten abgeschrägte Oberfläche 20 auf, wobei der Winkel der Abschrägung bevorzugt 45° beträgt. Diese Abschrägung erlaubt ein leichteres Einpassen des Auflageprofils 8.

Zum Zusammenbau der Fußelemente 4 mit den entsprechenden Auflageprofilen 8 wird nun das jeweilige Auflageprofil 8 in Pfeilrichtung bewegt, bis der Einrastvorsprung 10 in die dafür vorgesehene Einrastöffnung 12 formschlüssig einrastet. Die Oberkante 22 des Auflageprofils 8 liegt dann parallel zur Oberkante 18 des Seitenteils 4 und ist in dem Bereich, in dem die Seitenteile 6 rechtwinlig aufeinandertreffen, unter dem weiteren Verankerungselement 14 eingeklemmt. Die Oberkante 16 des weiteren Verankerungselements 14 liegt dabei weiterhin oberhalb der Oberkante 18 des Seitenteils 6 und der Oberkante 22 des Auflageprofils 8.

Diese Vorgehensweise wird an allen Ecken des Hdngerahmens 2 wiederholt, bis der Rahmen komplett zusammengebaut ist. Auf diese Weise gelingt es, den erfindungsgemäßen Hängerahmen ohne zusätzliches Werkzeug unter geringstem Kraftaufwand und mit Formschluß zusammenzusetzen. Es ensteht eine stabile Konstruktion, die ein zufälliges Auseinanderbrechen zuverlässig verhindert. Ein Auseinanderbauen des Hängerahmens ist nur mit einem entsprechenden Werkzeug möglich, mit dessen Hilfe die formschlüssige Verbindung zwischen dem Einrastvorsprung 10 und der Einrastöffnung 12 gelöst werden kann.

## Patentansprüche

1. Hängerahmen (2) zum Einhängen verschiedener Objekte, mit Fußelementen (4) und mit U-förmigen Auflageprofilen (8) zum Verbinden der Fußelemente (4), wobei die Fußelemente mindestens je ein Verankerungselement (10) in Form eines Einrastvorsprungs aufweisen, der beim Zusammenbau des Hängerahmens (2) in eine im jeweiligen Auflageprofil (8) angeordnete korrespondierende Einrastöffnung (12) einrastbar ist,**dadurch gekennzeichnet, dass** die Fußelemente (4) jeweils ein weiteres Verankerungselement (14) aufweisen, unter welches das jeweilige Auflageprofil (8) einsetzbar ist.

2. Hängerahmen nach Anspruch 1, **dadurch gekennzeichnet, dass** die Fußelemente (4) aus zueinander rechtwinklig angeordneten Seitenteilen (6) bestehen und das weitere Verankerungselement (14) in einem Bereich des Fußelements (4) angeordnet ist, in dem die Seitenteile (6) rechtwinklig aufeinandertreffen.

3. Hängerahmen nach Anspruch 1 oder 2, **dadurch gekennzeichnet, dass** die Oberkante (16) des weiteren Verankerungselements (14) über der Oberkante (18) der Seitenteile angeordnet ist.

4. Hängerahmen nach einem der Ansprüche 1 bis 3, **dadurch gekennzeichnet, dass** das Einrasten des Verankerungselements (10) in die Einrastöffnung (12) formschlüssig erfolgt.

5. Hängerahmen nach einem der Ansprüche 1 bis 4, **dadurch gekennzeichnet, dass** die Oberkanten (18) der Seitenteile (6) im Bereich des weiteren Verankerungselements (14) eine nach unten abgeschrägte Oberfläche (20) aufweisen.

6. Hängerahmen nach Anspruch 5, **dadurch gekennzeichnet, dass** der Winkel der Abschrägung etwa 45° beträgt.

## Claims

1. Suspension frame (2) for suspending various objects, having leg members (4) and having U-shaped sectional bearing members (8) for connecting the leg members (4), the leg members each having at least one anchoring member (10) in the form of a locking projection which, when the suspension frame (2) is being assembled, can be locked into a corresponding locking opening (12) arranged in the respective sectional bearing member (8), **characterised in that** each of the leg members (4) has a further anchoring member (14) beneath which the respective sectional bearing member (8) can be inserted.

2. Suspension frame according to claim 1, **characterised in that** the leg members (4) comprise lateral parts (6) arranged at right-angles to one another and the further anchoring member (14) is arranged in a region of the leg member (4) within which the lateral parts (6) meet at right-angles.

3. Suspension frame according to claim 1 or 2, **characterised in that** the upper edge (16) of the further anchoring member (14) is arranged above the upper edge (18) of the lateral parts.

4. Suspension frame according to any one of claims 1 to 3, **characterised in that** the locking of the anchoring member (10) into the locking opening (12) takes place in an interlocking manner.

5. Suspension frame according to any one of claims 1 to 4, **characterised in that** the upper edges (18) of the lateral parts (6) have a downwardly inclined surface (20) in the region of the further anchoring member (14).

6. Suspension frame according to claim 5, **characterised in that** the angle of the inclination is approximately 45°.

## Revendications

1. Cadre de suspension (2) pour suspendre des objets divers, avec éléments de pieds (4) et avec supports profilés en forme de U (8) pour relier les éléments de pieds (4), les éléments de pieds comportant chacun un élément d'ancrage (10) en forme de saillie d'encliquetage qui, lors du montage du cadre de suspension (2), peut être encliqueté dans un orifice d'encliquetage (12) correspondant disposé dans le support profilé respectif (8), **caractérisé en ce que** les éléments de pieds (4) comportent chaque fois un autre élément d'ancrage (14) sous lequel le support profilé (8) respectif peut être inséré.

2. Cadre de suspension selon la revendication 1, **caractérisé en ce que** les éléments de pieds (4) se composent de parties latérales (6) disposées perpendiculairement les unes aux autres et que l'autre élément d'ancrage (14) est disposé dans une zone de l'élément de pied (4), dans laquelle les parties latérales (6) se rejoignent perpendiculairement les unes sur les autres.

3. Cadre de suspension selon la revendication 1 ou 2, **caractérisé en ce que** le bord supérieur (16) de l'autre élément d'ancrage (14) est disposé au-dessus du bord supérieur (18) des parties latérales.

4. Cadre de suspension selon l'une des revendications 1 à 3, **caractérisé en ce que** l'encliquetage de l'élément d'ancrage (10) dans l'orifice d'encliquetage (12) se produit par conjugaison de formes.

5. Cadre de suspension selon l'une des revendications 1 à 4, **caractérisé en ce que** les bords supérieurs (18) des parties latérales (6) comportent dans la zone de l'autre élément d'ancrage (14) une surface (20) biseautée vers le bas.

6. Cadre de suspension selon la revendication 5, **caractérisé en ce que** l'angle du biseautage est d'environ 45°.
